# EUROPEAN PATENT APPLICATION

(11) **EP 2 538 693 A2**
(43) Date of publication of application: **26.12.2012**
(21) Application number: 12161053.9
(22) Date of filing: 23.03.2012
(51) Int. Cl.: H04N 21/439, H04N 21/434, G10L 21/00

(54) **Broadcast receiver and method for eliminating audio signal noise**

(30) Priority: 22.06.2011 KR 20110060850
(71) Applicant: Samsung Electronics Co., Ltd., Suwon-si, Gyeonggi-do, 443-742 (KR)
(72) Inventor: Kim, Jong-hyun, Seoul (KR)
(74) Representative: Fearnside, Andrew Simon

(57) **Abstract**

A broadcast receiver and a method for eliminating audios signal noise are provided. The broadcast receiver includes: an input unit which receives an audio signal and a video signal; an audio signal processor which processes and outputs the audio signal; and a controller which controls the audio signal processor so that an output level of the audio signal is lower than or equal to a preset comparative signal level for a preset period of time from an output time or an output stop time of the video signal.

## Description

### CROSS-REFERENCE TO RELATED APPLICATION

This application claims the benefit of priority from the Korean Patent Application No. 10-2011-0060850, filed on June 22, 2011, in the Korean Intellectual Property Office, the disclosure of which is incorporated herein by reference in its entirety.

### BACKGROUND

### 1. Field

Apparatuses and methods consistent with exemplary embodiments relate to a broadcast receiver and a method for eliminating audio signal noise, and more particularly, to a broadcast receiver and a method for adjusting an output level of an audio signal to automatically eliminate audio signal noise.

### 2. Description of the Related Art

A broadcast receiver is a device which receives a digital satellite broadcast, i.e., receives a digital or analog broadcast from a broadcasting station and image and audio signals from various types of external devices (e.g., a video player, a digital versatile disc (DVD) player, a Blue-ray disc (BD) player, etc.). Representative examples of the broadcast receiver include a digital television (DTV), an Internet Protocol Television (IPTV), such as Video on Demand (VOD) or the like, and a Set Top Box.

With the development of the broadcast receiver, the broadcast receiver basically realizes a full high definition (FHD) image quality and supports various functions such as the Internet, etc. Also, the broadcast receiver is connected to various types of external devices (e.g., a BD player, a play station 3 (PS3), a DVD player, etc.) to further expand its usability and extension.

When an existing TV product is connected to an external device, and then the external device is changed or turned on/off, video or audio transient phenomenon may occur.

Since the video transient phenomenon is first recognized by user's eyes, the video transient phenomenon is solved by displaying a screen (i.e., by recognizing a sync signal and resolution information) when a video signal stabilized through video signal processing or the like.

An audio signal is processed by an audio signal processor separately from the video signal. In other words, when a stable video signal is displayed, an audio signal is output. Here, the audio signal is not completely processed, and thus garbage data, such as an audio transient problem (i.e., pop noise), may be generated. Here, the pop noise refers to noise which suddenly pops when an audio or a video is turned on/off. Accordingly, a technique for automatically eliminating noise of an audio signal without the above-described problem is needed. In other words, a technique for adjusting an output level of an audio signal to automatically eliminating audio signal noise is required.

### SUMMARY

One or more exemplary embodiments may overcome the above disadvantages and other disadvantages not described above. However, it is understood that one or more exemplary embodiment are not required to overcome the disadvantages described above, and may not overcome any of the problems described above.

According to the present invention there is provided an apparatus and method as set forth in the appended claims. Other features of the invention will be apparent from the dependent claims, and the description which follows.

One or more exemplary embodiments provide a broadcast receiver and a method for improving a sound transient problem (pop noise, noise, or the like) occurring when the broadcast receiver is connected to an external device, in order to automatically eliminate audio signal noise.

According to an aspect of an exemplary embodiment, there is provided a broadcast receiver. The broadcast receiver includes: an input unit which receives an audio signal and a video signal; an audio signal processor which processes and outputs the audio signal; and a controller which controls the audio signal processor so that an output level of the audio signal is lower than or equal to a preset comparative signal level for a preset period of time after the video signal is output or stopped.

The controller may compare the output level of the audio signal with the preset comparative signal level to control the audio signal processor according to the comparison result for a first period of time which is from a time of input of an output signal and for a second period of time which is from a time of input of an output stop signal, and wherein the output signal includes a signal instructing to output the video signal, and the output stop signal includes a signal instructing to stop outputting the video signal.

If the output level of the audio signal exceeds the preset comparative signal level, the controller may mute the output level of the audio signal.

If the output level of the audio signal exceeds the preset comparative signal level, the controller may adjust the output level of the audio signal to the preset comparative signal level.

The controller may compare the output level of the audio signal with the preset comparative signal level having a rising form for the first period of time and compare the output level of the audio signal with the preset comparative signal level having a falling form for the second period of time.

The controller may control the audio signal processor by using one of a first comparative signal level which changes in a stair form, a second comparative signal level which gradually rises or falls, and a third comparative signal level which is maintained at a preset value.

The broadcast receiver may further include a display unit which displays an on-screen display (OSD). If a noise eliminating menu option is selected on the OSD, the controller may perform the controlling of the audio signal processor.

According to an aspect of another exemplary embodiment, there is provided a method of eliminating audio signal noise of a broadcast receiver. The method may include: receiving an audio signal and a video signal; and processing and outputting the audio signal, wherein the audio signal is adjusted for a preset period of time from a time the video signal is output or stopped so that an output level of the audio signal is lower than or equal to a preset comparative signal level.

The processing and outputting of the audio signal may include: comparing the output level of the audio signal with a first comparative signal level for a preset first period of time from a time of input of an output signal which includes a signal instructing to output the video signal; if the output level of the audio signal exceeds the first comparative signal level within the first period of time, muting the output level of the audio signal; comparing the output level of the audio signal with a second comparative signal level for a preset second period of time from a time of input of an output stop signal which includes a signal instructing to stop outputting the video signal; and if the output level of the audio signal exceeds the second comparative signal level within the second period of time, muting the output level of the audio signal.

The processing and outputting of the audio signal may include: if the output level of the audio signal exceeds the preset comparative signal level, muting the output level of the audio signal.

The processing and outputting of the audio signal may include: if the output level of the audio signal exceeds the preset comparative signal level, the output level of the audio signal is adjusted to the preset comparative signal level.

The first comparative signal level may be a rising form comparative signal level, and the second comparative signal level may be a falling form comparative signal level.

The preset comparative signal level may be a first comparative signal level which changes in a stair form, a second comparative signal level which gradually rises or falls , or a third comparative signal level which is maintained at a preset value.

According to an aspect of another exemplary embodiment, there is provided a non-transitory recording medium storing a program code for executing the method.

The preset comparative signal level may be of a first comparative signal level which changes in a stair form, a second comparative signal level which gradually rises or falls , or a third comparative signal level which is maintained at a preset value.

Additional aspects and advantages of the exemplary embodiments will be set forth in the detailed description, will be obvious from the detailed description, or may be learned by practicing the exemplary embodiments.

### BRIEF DESCRIPTION OF THE DRAWING FIGURES

The above and/or other aspects will be more apparent by describing in detail exemplary embodiments, with reference to the accompanying drawings, in which:
FIG. 1 is a block diagram illustrating a structure of a broadcast receiver which eliminates audio signal noise according to an exemplary embodiment;
FIG. 2 is a view illustrating time orders of a process of eliminating audio signal noise according to an exemplary embodiment;
FIG. 3 is a view illustrating a process of eliminating audio signal noise according to an exemplary embodiment; and
FIG. 4 is a flowchart illustrating a method of eliminating audio signal noise according to an exemplary embodiment.

### DETAILED DESCRIPTION OF THE EXEMPLARY EMBODIMENTS

Hereinafter, exemplary embodiments will be described in greater detail with reference to the accompanying drawings.

In the following description, same reference numerals are used for analogous elements when they are depicted in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, functions or elements known in the related art are not described in detail since they would obscure the exemplary embodiments with unnecessary detail.

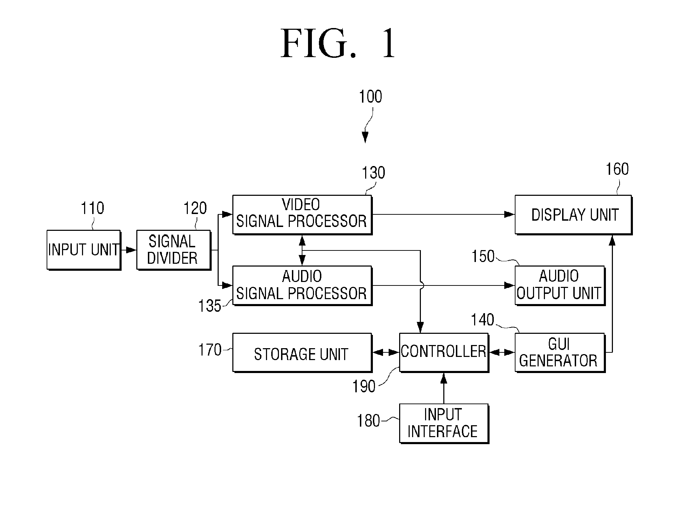

FIG. 1 is a block diagram illustrating a structure of a broadcast receiver 100 which eliminates audio signal noise, according to an exemplary embodiment. Referring to FIG. 1, the broadcast receiver 100 includes an input unit 110, a signal divider 120, a video signal processor 130, an audio signal processor 135, a graphical user interface (GUI) generator 140, an audio output unit 150, a display unit 160, a storage unit 170, an operator 180, and a controller 190.

The input unit 110 receives image data having various characteristics. The input unit 110 receives an image through inputs of various formats. Here, the image includes video and audio signals. For example, the input unit 110 may be a high definition multimedia interface (HDMI), a component, a composite, S-Video, or a digital visual interface (DVI). The input unit 110 may also include a tuner which receives an image through a broadcast signal. The input unit 110 may receive an image through a recoding medium such as a compact disc (CD), a DVD, Blue-ray, or the like.

The signal divider 120 divides a signal, which is input into the input unit 110, into a video signal and an audio signal. The signal divider 120 transmits the video signal to the video signal processor 130 and the audio signal to the audio signal processor 135.

The video signal processor 130 performs video decoding, video scaling, and processing of a video transient problem (i.e., noise which will be described in more detail later), with respect to the video signal input from the input unit 110 and the storage unit 170. The video signal processor 130 also outputs the processed video signal to the GUI generator 140.

The audio signal processor 135 performs audio decoding and processing of an audio transient problem (i.e., pop noise which will be described in more detail later), with respect to the audio signal input from the input unit 110 and the storage unit 170. The audio signal processor 135 also outputs the processed audio signal to the audio output unit 150.

If the received video and audio signals are stored in the storage unit 170, the video signal processor 130 and the audio signal processor 135 may store an image in a compression format in the storage unit 170.

The audio output unit 150 converts the audio signal, which is processed by the audio signal processor 135, into a sound and outputs the sound through a speaker (not shown) or outputs the sound to an external device through an external output terminal (not shown).

The GUI generator 140 generates a GUI which is to be provided to a user. The GUI generator 140 adds the GUI to the image output from the video signal processor 130. The display unit 160 displays the image with the added GUI.

The GUI generator 140 may generate a GUI which is to select a noise eliminating mode from a noise eliminating menu. Therefore, if the user does not select a noise eliminating mode, the audio signal processor 135 performs signal processing except the processing of the audio transient problem. The audio signal processor 135 also provides a signal-processed output to the audio output unit 150. The audio output unit 150 converts the audio signal, the audio transient problem of which has not been processed, into the sound and outputs the sound through the speaker. In other words, the user may listen to a sound equal to a volume value together with an output of a video.

If the user selects the noise eliminating mode, the audio signal processor 135 provides a signal-processed output which includes the audio transient problem to the audio output unit 150. The audio output unit 150 converts the audio signal, the audio transient problem of which has been processed, into a sound and outputs the sound through the speaker. In other words, the user may listen to sound, noise of which has been muted or noise output level of which has been reduced.

The GUI generator 140 is not limited to the above-described function but may generate any GUI which may be displayed on the display unit 160.

The storage unit 170 stores image contents. In more detail, the storage unit 170 may receive compressed image contents from the video signal processor 130 and the audio signal processor 135 and store the compressed image contents. The storage unit 170 may also output stored image contents to the video signal processor 130 and the audio signal processor 135 under the control of the controller 190. The storage unit 170 may be realized as a hard disc, a nonvolatile memory, a volatile memory, or the like.

The input interface 180 may be realized as a touch screen, a touch pad, a key button, a key pad, or the like and receives an operation of the user and provides it to the broadcast receiver 100. In more detail, the user selects whether to use the noise eliminating mode of the broadcast receiver 100, by using the input interface 180, and the input interface 180 transmits a performance command corresponding to the user selection to the controller 190 which will be described later. The input interface 180 is not limited thereto but may provide a user operation (e.g., TV on/off operations, etc.) input from the user.

The controller 190 outputs the image contents, which are stored in the storage unit 170, to the video signal processor 130 and the audio signal processor 135.

The controller 190 receives the performance command corresponding to the user selection, which is input through the input interface 180, to control an operation of the broadcast receiver 100.

The controller 190 controls the video signal processor 130 to process the video transient problem.

In more detail, if the broadcast receiver 100 is connected to an external device (not shown) through the input unit 110 and a source switches from the broadcast receiver 100 to the external device or from the external device to another external device, or if power of the external device connected to the broadcast receiver 100 is turned on/off, the video transient problem occurs. The video transient problem refers to a phenomenon in which if the power of the external device connected to the broadcast receiver 100 is turned on, a first output video includes noise and thus does not appear clearly. In this case, the video transient problem is first recognized by user's eyes and thus the transient problem is processed so that it can be eliminated.

The controller 190 controls the video signal processor 130 to process the video transient problem and to output the video signal through the display unit 160 when the video signal is stabilized. In other words, if the video signal is input into the video signal processor 130, the controller 190 transmits a video output stop signal to the video signal processor 130 until it is determined that the video signal is stabilized, so as not to output a video to the display unit 160. Therefore, if the source switches from a TV to an external device or power of the external device is turned on, the controller 190 controls the display unit 160 not to directly output the video. That is, the controller 190 controls the video signal processor 130 to output the video signal when or after the video signal is stabilized. The determination of the stabilization of the video signal may be made through a sync signal recognition or resolution information recognition.

The sync signal recognition is possible by recognizing H-sync and V-sync signals constituting a video format. In more detail, a trigger level for recognizing the H-sync and V-sync signals may be set to determine that the video signal has been stabilized, from the trigger level.

Resolution is a video format which is determined by Society for Motion and Television Engineers (SMPTE), Video Electronics Standards Association (VESA), etc. The resolution information recognition may determine whether the video signal is stabilized according to whether output resolution satisfies standards.

If it is determined that the video signal has been stabilized, the controller 190 transmits a video output signal to the video signal processor 130 to control the video signal processor 130 so as to output the processed video signal to the display unit 160.

If the source switches over to another external device or the power of the external device connected to the broadcast receiver 100 is turned off, the controller 190 controls the video signal processor 130 to immediately stop outputting the video. This is because the video transient problem occurs in the display unit 160 if outputting the video does not immediately stop when the power of the external device is turned off. In other words, the controller 190 transmits the video output stop signal to the video signal processor 130 not to display the video to the display unit 160.

The controller 190 controls the audio signal processor 135 to process the audio transient problem (pop noise, noise, etc).

An exemplary embodiment in which the current mode is set to the noise eliminating mode will now be described by way of an example and not by way of a limitation. The controller 190 senses a time when the video is output through the display unit 160. The time when the video is output corresponds to a time when the controller 190 transmits the video output signal to the video signal processor 130 so as to force the video signal processor 130 to output a stable video signal to the display unit 160.

The controller 190 also senses a time when the video stops to be output through the display unit 160. The time when the vide stops to be output corresponds to a time when the controller 190 transmits the video output stop signal to the video signal processor 130 so as to force the video signal processor 130 to stop outputting the video signal to the display unit 160.

Pop noise refers to noise which suddenly pops when an audio or a video is turned on/off and which occurs when the video is output to the display unit 160 or the video signal stops to be output to the display unit 160.

Therefore, the controller 190 senses a time when the video is output through the display unit 160 (i.e., a time when the video output signal is transmitted to the video signal processor 130) to control the audio signal processor 135 so that an output level of the audio signal is lower than or equal to a preset comparative signal level. According to the method of controlling the audio signal processor 135 so that the output level is lower than or equal to the preset comparative signal level, the audio signal processor 135 may include a comparator to compare a signal input into the audio signal processor 135 with the preset comparative signal level so that an output level of the signal is lower than or equal to the preset comparative signal level. Here, the preset comparative signal level may be differently set according to each manufacturing company of each of the broadcast receivers 100. The preset comparative signal level may have a gradually rising form, a stair rising form, or a form which is maintained at a set value.

The controller 190 senses the time when the video is stopped, no longer output through the display unit 160 (the time when the video output stop signal is transmitted to the video signal processor 130) to control the audio signal processor 135 so that the output level of the audio signal is lower than or equal to the preset comparative signal level. Here, the preset comparative signal level may be differently set according to each manufacturing company of each of the broadcast receivers 100. The preset comparative signal level may have a gradually falling form, a stair falling form, or a form which is maintained at a set value.

For a preset first time section from an input time of the video output signal for outputting the video signal and a second time section from an input time of the video output stop signal for stopping outputting the video signal, the controller 190 compares the output level of the audio signal with the preset comparative signal level to control the audio signal processor 135 according to the comparison result. Here, because pop noise occurs only for a short time from a time when the video is output or a time when the video stops to be output, the output level of the audio signal is compared with the preset comparative signal level only for a preset time section. Here, the preset time section may be differently set according to each manufacturing company of each of the broadcast receivers 100.

If the output level of the audio signal exceeds the preset comparative signal level, the controller 190 may mute the output level of the audio signal. Therefore, noise may be completely eliminated from an audio output.

If the output level of the audio signal exceeds the preset comparative signal level, the controller 190 may adjust the output level of the audio signal to the preset comparative signal level. In this case, the preset comparative signal level may have a gradually rising form or a stair rising form. Therefore, the audio signal includes noise, but size of the noise may be reduced, and a sound may be listened to simultaneously when the video is output.

If a preset time has elapsed, the controller 190 may immediately pass the signal input into the audio signal processor 135 without processing the audio transient problem. This is because the pop noise does not occur due to its characteristic after a preset time elapses.

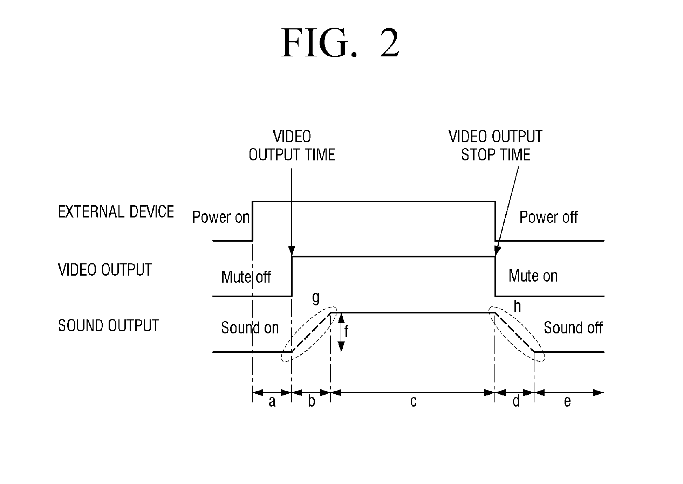

FIG. 2 is a view illustrating time orders of a process of eliminating audio signal noise according to an exemplary embodiment.

A section "a" refers to a time when a video is output after power of an external device is turned on or a source switches from a TV to the external device. For the section "a," if a video signal is input into the video signal processor 130, the controller 190 transmits a video output stop signal to the video signal processor 130 until it is determined that the video signal is stabilized. The video output stop signal instructs the signal processor 130 not to output a video to the display unit 160 in order to prevent a video transient problem. If it is determined that the video signal is stabilized, the controller 190 transmits a video output signal to the video signal processor 130 so as to output the video signal to the display unit 160. This is represented as "mute off" in FIG. 2.

A section "b" refers to a time when a final sound is output after the video is output. For the section "b," the controller 190 senses a time when the video is output (i.e., senses a video output signal) to control the audio signal processor 135 so that an output level of an audio signal is lower than or equal to a preset comparative signal level for a preset time section. This is represented as "sound on" in FIG. 2. A form "g" of the preset comparative signal level is a gradually rising form in FIG. 2 but is not limited thereto. Therefore, the form "g" of the preset comparative signal level may be represented in a stair rising form or a maintaining form.

A section "c" refers to a section in which the sound is normally output and an audio signal processed by the audio signal processor 135 immediately passes. For the section "c," the controller 190 determines that a preset time has elapsed, to immediately pass the audio signal without comparing the audio signal with the comparative signal level.

A section "d" refers to a section in which the power of the external device is turned off or the source switches from the external device to another external device or to a TV. For the section "d," the controller 190 transmits a video output stop signal to the video signal processor 130 not to output the video to the display unit 160.

The controller 190 senses a time when the video stops to be output (i.e., senses a video output stop signal) to control the audio signal processor 135 so that the output level of the audio signal is lower than or equal to the preset comparative signal level for a preset time section. This is represented as "sound off' in FIG. 2. A form "h" of the preset comparative signal level is a gradually falling form but is not limited thereto. Therefore, the form "h" may be represented in a stair falling form or a maintaining form.

A section "e" refers to a section in which the sound is not output.

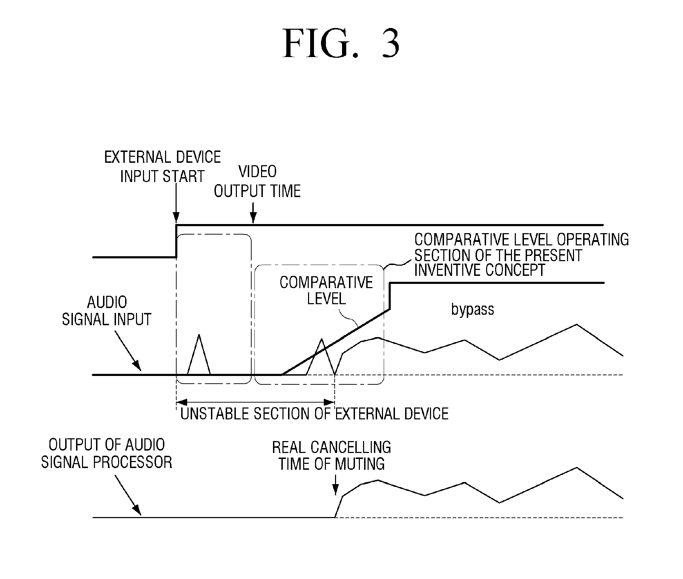

FIG. 3 is a view illustrating a process of eliminating audio signal noise according to an exemplary embodiment.

If a source switches from a TV to an external device or power of the external device is turned on, the external device starts to receive power and/or other input. An input start time of the external device is shown in an upper part of FIG. 3. If a video signal is input into the video signal processor 130, the controller 190 transmits a video output stop signal to the video signal processor 130 until it is determined that the video signal is stabilized. The video output stop signal instructs the signal processor 130 not to output the video signal to the display unit 160. Therefore, although a video is output after a predetermined time elapses, a time when a video is output is shown in the upper part of FIG. 3. This is represented as a video output time in FIG. 3.

An audio signal input into the audio signal processor 135 is shown in an intermediate part of FIG. 3. In FIG. 3, a portion of the audio signal input in an unstable section of the external device may be noise, in particular, pop noise. In this case, the controller 190 senses the video output time to control the audio signal processor 135 so that an output level of the audio signal is lower than or equal to a preset comparative signal level for a preset time section. In other words, as shown in a lower part of FIG. 3, if the output level of the audio signal output from the audio signal processor 135 higher than the preset reference signal level, the output level is muted, by way of an example and not by way of a limitation. If the output level of the audio signal exceeds the preset comparative signal level, the output level of the audio signal may be adjusted to the preset comparative signal level. Also, a form of the preset comparative signal level is a gradually rising form but is not limited thereto. Therefore, the form of the preset comparative signal level may be represented as a stair rising form or a maintaining form.

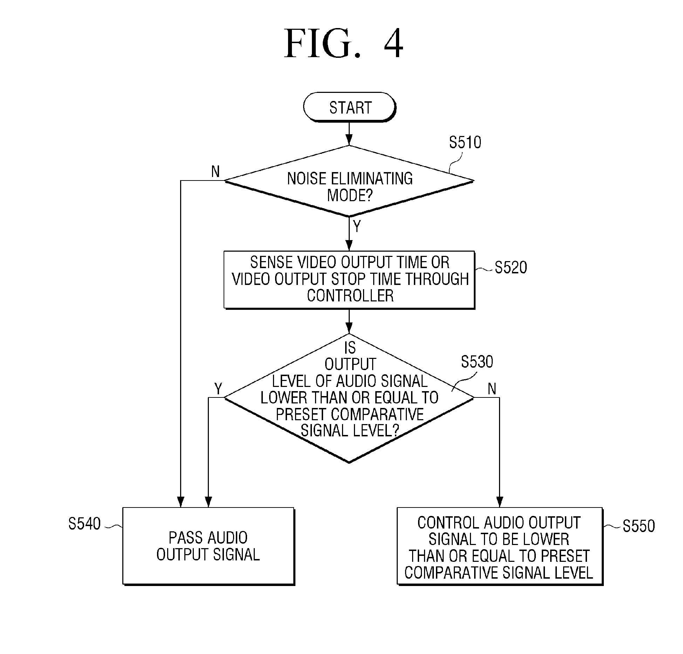

FIG. 4 is a flowchart illustrating a method of eliminating audio signal noise according to an exemplary embodiment.

In operation S510, the controller 190 determines whether a current mode is a noise eliminating mode.

If it is determined that the current mode is not the noise eliminating mode, an audio signal input into the audio signal processor 135 is output to the audio output unit 150 without processing an audio transient problem in operation S540.

If it is determined that the current mode is the noise eliminating mode, the controller 190 senses a video output time or a video output stop time in operation S520. In operation S530, the controller 190 determines whether an output level of the audio signal input into the audio signal processor 135 is lower than or equal to a preset comparative signal level. If it is determined that an output level of the audio signal is lower than or equal to the preset comparative signal level, the audio signal input into the audio signal processor 135 is output to the audio output unit 150 without processing an audio transient problem in operation S540.

If the output level of the audio signal exceeds the preset comparative signal level, the output level of the audio signal is controlled to be lower than or equal to the preset comparative signal level in operation S550.

As described above, according to exemplary embodiments, a sound transient problem (pop noise, noise, or the like), which occurs when being connected to various types of external devices, may be solved. In particular, a compatibility margin may be secured from a TV produce with respect to various operation specifications of external devices.

A noise eliminating method according to the above-described various exemplary embodiments is performed by a broadcast receiver but may be performed by a signal processing apparatus which is used in a broadcast receiver or an outputting apparatus. The signal processing apparatus may be realized as a single apparatus or a chip embedded in a broadcast receiver.

Also, the noise eliminating method may be realized by a program code which is stored in various types of recording media and executed by a central processing unit (CPU) or the like.

In more detail, a code for executing the above-described methods may be stored in various types of computer readable recording media such as a random access memory (RAM), a flash memory, a read only memory (ROM), an erasable programmable ROM (EPROM), an electrically erasable and programmable ROM (EEPROM), a register, a hard disc, a removable disc, a memory card, a universal serial bus (USB) memory, a compact disc-ROM (CD-ROM), etc.

The foregoing exemplary embodiments have been particularly shown and described. It will be understood by those of ordinary skill in the art that various changes in form and details may be made therein without departing from the spirit and scope of the inventive concept as defined by the appended claims. Exemplary embodiments are merely exemplary and are not to be construed as limiting the present inventive concept. The exemplary embodiments can be readily applied to other types of apparatuses. Also, the description of the exemplary embodiments is intended to be illustrative, and not to limit the scope of the claims, and many alternatives, modifications, and variations will be apparent to those skilled in the art. Therefore, the scope is defined not by the detailed description of exemplary embodiments but by the appended claims, and all differences within the scope will be construed as being included in the present invention.

Although a few preferred embodiments have been shown and described, it will be appreciated by those skilled in the art that various changes and modifications might be made without departing from the scope of the invention, as defined in the appended claims.

## Claims

1. A broadcast receiver comprising:
an input unit which receives an audio signal and a video signal;
a video signal processor which processes and outputs the video signal;
an audio signal processor which processes and outputs the audio signal; and
a controller which controls the audio signal processor so that an output level of the audio signal is lower than or equal to a preset comparative signal level for a preset period of time after the video signal is output or stopped.

2. The broadcast receiver as claimed in claim 1, wherein the controller compares the output level of the audio signal with the preset comparative signal level to control the audio signal processor according to the comparison result for a preset first period of time from a time of input of an output signal and for a preset second period of time section from a time of input of an output stop signal, wherein the output signal includes a signal instructing to output the video signal, and the output stop signal includes a signal instructing to stop outputting the video signal.

3. The broadcast receiver as claimed in claim 1, wherein if the output level of the audio signal exceeds the preset comparative signal level, the controller mutes the output level of the audio signal.

4. The broadcast receiver as claimed in claim 1, wherein if the output level of the audio signal exceeds the preset comparative signal level, the controller adjusts the output level of the audio signal to the preset comparative signal level.

5. The broadcast receiver claimed in claim 2, wherein the controller compares the output level of the audio signal with the preset comparative signal level having a rising form for the first period of time and compares the output level of the audio signal with the preset comparative signal level having a falling form for the second period of time.

6. The broadcast receiver as claimed in any one of claims 1 through 4, wherein the controller controls the audio signal processor by using one of a first comparative signal level which changes in a stair form, a second comparative signal level which gradually rises or falls, a third comparative signal level which is maintained at a preset value.

7. The broadcast receiver as claimed in any one of claims 1 through 6, further comprising a display unit which displays an on-screen display (OSD) for selecting a noise eliminating menu option,
wherein if the noise eliminating menu option is selected on the OSD, the controller performs the controlling of the audio signal processor.

8. A method of eliminating audio signal noise of a broadcast receiver, the method comprising:
receiving an audio signal and a video signal;
processing and outputting the video signal; and
processing and outputting the audio signal,
wherein the audio signal is adjusted for a preset period of time from a time the video signal is output or stopped so that an output level of the audio signal is lower than or equal to a preset comparative signal level.

9. The method as claimed in claim 8, wherein the processing and outputting of the audio signal comprises:
comparing the output level of the audio signal with a first comparative signal level for a preset first period of time from a time of input of an output signal which includes a signal instructing to output the video signal;
if the output level of the audio signal exceeds the first comparative signal level within the first period of time, reducing the output level of the audio signal;
comparing the output level of the audio signal with a second comparative signal level for a preset second period of time from a time of input of an output stop signal which includes a signal instructing stopping outputting the video signal; and
if the output level of the audio signal exceeds the second comparative signal level within the second period of time, reducing the output level of the audio signal.

10. The method as claimed in claim 8, wherein the processing and outputting of the audio signal comprises: if the output level of the audio signal exceeds the preset comparative signal level, muting the output level of the audio signal.

11. The method as claimed in claim 8, wherein the processing and outputting of the audio signal comprises: if the output level of the audio signal exceeds the preset comparative signal level, the output level of the audio signal is adjusted to the preset comparative signal level.

12. The method as claimed in claim 9, wherein the first comparative signal level is a rising form comparative signal level, and the second comparative signal level is a falling form comparative signal level.

13. The method as claimed in any one of claims 8 through 11, wherein the preset comparative signal level is one of a first comparative signal level which changes in a stair form, a second comparative signal level which gradually rises or falls , and a third comparative signal level which is maintained at a preset value.

14. A recording medium storing a program code for executing the method of claim 8.

15. The recording medium as claimed in claim 14, wherein the preset comparative signal level is one of a first comparative signal level which changes in a stair form, a second comparative signal level which gradually rises or falls, and a third comparative signal level which is maintained at a preset value.
